# EUROPÄISCHE PATENTSCHRIFT

(11) **EP 3 586 091 B1**
(45) Veröffentlichungstag und Bekanntmachung des Hinweises auf die Patenterteilung: **16.12.2020**
(21) Anmeldenummer: 18700633.3
(22) Anmeldetag: 11.01.2018
(51) Int. Cl.: G01G 23/01

(54) **VERFAHREN ZUM AUTOMATISIERTEN JUSTIEREN EINER WAAGE**
METHOD FOR THE AUTOMATED ADJUSTMENT OF A SCALE
PROCÉDÉ D'AJUSTEMENT AUTOMATISÉ D'UNE BALANCE

(30) Priorität: 23.02.2017 DE 102017103681
(43) Veröffentlichungstag der Anmeldung: 01.01.2020
(73) Patentinhaber: Sartorius Lab Instruments GmbH & Co. KG, 37079 Göttingen (DE)
(72) Erfinder: KLAUER, Alfred, 37083 Göttingen (DE); LAUBSTEIN, Michael, 37077 Göttingen (DE)
(74) Vertreter: Vigand, Philippe
(86) Internationale Anmeldenummer: PCT/EP2018/000016
(87) Internationale Veröffentlichungsnummer: WO 2018/153540

(56) Entgegenhaltungen:
- DE-A1- 19 960 418
- US-A1- 2011 147 099

## Beschreibung

### Gebiet der Erfindung

Die Erfindung bezieht sich auf ein Verfahren zum automatisierten Justieren einer Waage mit automatisierter Justiergewichtsschaltung, umfassend die automatisch durchgeführten Schritte:
- Auflegen eines aus einem mehrere Justiergewichte umfassenden Justiergewicht-Vorrat ausgewählten Justiergewichts auf einen mit einer Lastaufnahme in gravimetrischer Wirkverbindung stehenden Justiergewichtshalter,
- Erfassen eines für die Belastung der Lastaufnahme repräsentativen Messwertes und
- Berechnung, aus dem repräsentativen Messwert, eines entsprechenden Justierwertes, der bei nachfolgenden Wägungen einer Ermittlung von Wägewerten aus den zugeordneten Wägungen zugrunde gelegt werden soll.

### Stand der Technik

Automatisierte Justierverfahren für elektronische Waagen sind dem Fachmann allgemein bekannt. Spezielle Justierverfahren sind in der DE 10 2006 022 411 B3, der DE 20 01 455 U1 und der DE 10 2011 000 554 A1 beschrieben. Gemeinsam ist den dort beschriebenen Verfahren der Ansatz, die Waage, insbesondere deren Lastaufnahme, mit einer Last zu beaufschlagen, die in der Nähe der durch die Waagenmechanik und -elektronik vorgegebenen Maximalbelastung liegt. In diesem belasteten Zustand wird ein für die entsprechende Belastung repräsentativer Messwert erfasst. Im Fall der im Kontext der vorliegenden Erfindung besonders relevanten elektromagnetisch kompensierenden Waagen (sogenannte EMK-Waagen) fällt der repräsentative Messwert in Form eines Messstroms an, der über einen In einem Speicher hinterlegten Justierwert in einen eigentlichen Wägewert, d.h. die nummerische Angabe eines gemessenen Gewichtes, umgerechnet werden kann. Umgekehrt kann bei der Justierung aus der Kenntnis der Belastung und dem erfassten Messwert der aktuell gültige Justierwert ermittelt werden, zu dessen exakter Bestimmung jedoch noch weitere Parameter eingehen können. Die spezielle Art und Weise der Justierwertberechnung aus dem erfassten, repräsentativen Messwert ist für die vorliegende Erfindung nicht von Bedeutung; dem Fachmann sind hier unterschiedliche Berechnungsmethoden und -verfahren bekannt.

Die DE 199 60 418 A1 beschreibt gleichfalls ein Verfahren zum automatischen Justieren einer Waage, wobei dieses Verfahren kundenspezifische Aufbauten auf der Waagschale berücksichtigt, indem unmittelbar vor dem Auflegen des Justiergewichtes eine Vorlast errechnet und dann mit dem Auflegen des Justiergewichtes ein damit korrigierter Justierfaktor bestimmt wird.

Zur Realisierung der Belastung ist ein als Justiergewichtsschaltung bezeichneter Mechanismus bekannt, der in automatisierter Weise, insbesondere nach Vorgabe einer elektronischen Steuerung, ein im Waagengehäuse vorgehaltenes Justiergewicht von einem gehäusefesten Lager auf einen Justiergewichtshalter, der in gravimetrischer Wirkverbindung mit der Lastaufnahme steht, überführt wird. Nach der Erfassung des repräsentativen Messwertes wird das Justiergewicht von der Justiergewichtsschaltung zurück auf sein Lager überführt, sodass bei der eigentlichen Wägung die Lastaufnahme lediglich mit dem eigentlichen Wägegut belastet wird.

Der Begriff des Justiergewichts ist im Kontext dieser Beschreibung weit zu verstehen und umfasst nicht nur Einzelgewichtsstücke sondern auch vorausgewählte Gruppen von Einzelgewichtsstücken, die gemeinsam das zur Justierung erforderliche und auf eine angepasste Haltevorrichtung, den "Justiergewichtshalter", aufzulegende "Justiergewicht" bilden. Justiergewichtsschaltungen mit mehreren einzeln oder gruppenweise auflegbaren Einzelgewichtsstücken sind z.B. aus der DE 10 2011 055 160 B3 bekannt. Insbesondere ist es aus der internationalen Richtlinie OIML R111-2:2004 bekannt, zur Realisierung eines Justiergewichts der normierten Masse "1" vier Einzelgewichtsstücke A, B, C, D mit zugeordneten Massen "0,5", "0,2", "0,2" und "0,1" zu bevorraten und zur Realisierung jedes Justiergewichts zwischen "0,1" und "1" entsprechende Gruppen von Einzelgewichtsstücken vorzugeben, z.B. gemäß folgender Tabelle:

| A (0,5) | B (0,2) | C (0,2) | D (0,1) | realisiertes Justiergwicht (normiert) |
|---|---|---|---|---|
| x | x | x | x | 1 |
| x | x | x | | 0,9 |
| x | x | | x | 0,8 |
| x | x | | | 0,7 |
| x | | | x | 0,6 |
| x | | | | 0,5 |
| | x | x | | 0,4 |
| | x | | x | 0,3 |
| | x | | | 0,2 |
| | | | x | 0,1 |

Die werkseitige Vorauswahl bestimmter Gruppen von Einzelgewichtsstücken, z.B. der Gruppe "A, B, D" anstelle der rechnerisch ebenfalls möglichen Gruppe "A, C, D" zur Realisierung eines Justiergewichts von "0,8" erlaubt es, exakt reproduzierbare Fehler, die sich unvermeidlich als Summe der Einzelfehler der Einzeljustiergewichte ergeben, bei der Justierung zu berücksichtigen.

Insbesondere bei Analysen- und Mikro- bzw. Ultramikrowaagen ist das nutzbare Belastungsfenster, d.h. der nutzbare Wägebereich, zum Teil sehr gering. Rein beispielhaft seien Ultramikro- und Mikrowaagen mit Wägebereichen von 2 g bzw. 6 g erwähnt.

Die US 2011/0147099 A1 offenbart ein Wägesystem, an welches interne Justiergewichte in positiv oder negativ additiver Weise über unidirektionale Hebelkopplungen angekoppelt werden können, um entweder eine Kalibrierung oder eine Erweiterung des Wägebereichs zu ermöglichen, wobei sich diese Druckschrift auf den speziellen Ankopplungsmechanismus konzentriert.

In vielen Anwendungsbereichen, insbesondere wo sich häufig wiederholende, routinemäßige Wägeprozesse gefordert sind, verlangen die Anwender nach speziellen Wägeguthaltern, die an eine spezielle Form des zu verwiegenden Wägegutes angepasst sind. Da solche Spezialkonstruktionen typischerweise auch hohe Stabilitätsanforderungen erfüllen sollen, sind sie häufig nicht ebenso leicht wie standardisierte Wägeguthalter, insbesondere Waagschalen, für die die Waagen herstellerseitig standardmäßig ausgelegt sind. Aus wirtschaftlichen Gründen ist es nämlich herstellerseitig nicht möglich, die Waagen im Hinblick auf ihre Mechanik und Elektronik individuell für die Nutzung mit unterschiedlich schweren Wägeguthaltern auszulegen. Zudem findet eine Analysen- oder Mikro- bzw. Ultramikrowaage im Laufe ihres Lebens typischerweise Einsatz im Rahmen unterschiedlicher Wägeaufgaben mit entsprechend unterschiedlichen Haltern oder speziellen Waagschalen.

Bei der Verwendung von Wägeguthaltern, die schwerer als standardmäßige Waagschalen sind, ergibt sich somit das Problem, dass das Auflegen des Justiergewichts zu einer Überbelastung der Waage führt, d.h. zu einer Beaufschlagung der Lastaufnahme oberhalb der vorgegeben Maximalbelastung. Schlimmstenfalls kann die Überbelastung zu einer Beschädigung der Waage führen.

### Aufgabenstellung

Es ist die Aufgabe der vorliegenden Erfindung, das gattungsgemäße Justierverfahren derart weiterzubilden, dass auch beim Einsatz überschwerer Wägeguthalter eine präzise Justierung ermöglicht wird.

### Darlegung der Erfindung

Diese Aufgabe wird in Verbindung mit den Merkmalen des Oberbegriffs von Anspruch 1 dadurch gelöst, dass unmittelbar vor dem Auflegen des Justiergewichts ein Wägewert ermittelt und ein innerhalb eines vorgegebenen Belastungsfensters der Lastaufnahme maximal mögliches Zusatzgewicht berechnet wird,
und dass dasjenige Justiergewicht ausgewählt und auf den Justiergewichtshalter aufgelegt wird, dessen Nominalgewicht das größte all derjenigen Justiergewichte ist, deren Nominalgewicht kleiner als das berechnete, maximal mögliche Zusatzgewicht ist.

Bevorzugte Ausführungsformen der Erfindung sind Gegenstand der abhängigen Patentansprüche.

Die Grundidee der vorliegenden Erfindung ist es, nicht einfach unhinterfragt eine Last durch Auflegen des immer gleichen Justiergewichts zu realisieren, sondern nach differenzierter Situationsanalyse ein der aktuellen Belastungssituation angepasstes Justiergewicht auszuwählen und dieses zur Realisierung der Belastung der Lastaufnahme zu verwenden. Dadurch kann trotz der Benutzung überschwerer Wägeguthalter, die zum Zeitpunkt der Waagenherstellung so nicht absehbar war, eine präzise Justierung sichergestellt werden, bei der der repräsentative Messwert in einem Belastungszustand nahe der zulässigen Maximallast, jedoch jedenfalls innerhalb des Belastungsfensters erfasst werden kann. Hierzu wird unmittelbar vor dem Auflegen des Justiergewichts eine Messung mit anschließender Berechnung durchgeführt. "Unmittelbar" bedeutet in diesem Zusammenhang, dass zwischen der Messung/Berechnung und dem Auflegen des Justiergewichts keine Schritte erfolgen, die die Arbeitsbedingungen der Waage ergebnisrelevant beeinflussen, bzw. dass das Zeitintervall zwischen Messung/Berechnung und Auflegen des Justiergewichts hinreichend klein ist, sodass eventuelle Änderungen von Umgebungsparametern, beispielsweise der Temperatur, keinen ergebnisrelevanten Einfluss haben können.

Die vorzunehmende Messung entspricht der gewöhnlichen Aufnahme eines Wägewertes unter Zugrundelegung des aktuell gespeicherten Justierwertes. Der so aufgenommene Wägewert ist zwar aufgrund des mutmaßlich unrichtigen Justierwertes nicht sonderlich präzise; er stellt jedoch eine gute Abschätzung für die aktuelle Belastungssituation der Lastaufnahme, insbesondere unter Berücksichtigung eines eventuellen Übergewichts eines speziellen Wägeguthalters, dar. Durch Vergleich, insbesondere durch Differenzbildung, zwischen diesem (unpräzisen) Wägewert und der bekannten Maximalbelastung der Lastaufnahme lässt sich berechnen, mit welchem Zusatzgewicht die Lastaufnahme maximal belastbar ist, ohne in einen Überlastzustand überzugehen, d.h. ohne das vorgegebene Belastungsfenster zu verlassen.

Dieser berechnete Differenzwert wird alsdann der Auswahl eines geeigneten Justiergewichts aus einem Vorrat mehrerer Justiergewichte, der vorzugsweise innerhalb des Waagengehäuses verortet ist, zugrunde gelegt. Insbesondere werden sämtliche Justiergewichte verworfen, deren Nominalgewicht größer als das berechnete Zusatzgewicht ist Von den nach dieser Selektion noch übrig bleibenden Justiergewichten wird dasjenige mit dem höchsten Nominalgewicht ausgewählt und auf den Justiergewichtshalter aufgelegt, um die Lastaufnahme entsprechend zu belasten. Auf diese Weise wird sichergestellt, dass die nachfolgende Aufnahme des repräsentativen Messwertes im für die Durchführung der Justierung optimalen Zustand stattfindet, nämlich möglichst nahe an der Maximalbelastungsgrenze, jedoch noch innerhalb des vorgegebenen Belastungsfensters.

Der Fachmann wird verstehen, dass diese Optimierung des Belastungszustandes umso präziser erfolgen kann, je mehr und je feiner gestaffelte Justiergewichte im Justiergewicht-Vorrat zur Verfügung stehen. Dies kann insbesondere dann gegeben sein, wenn, wie bevorzugt vorgesehen, der Justiergewichtsvorrat eine Mehrzahl von Einzelgewichtsstücken unterschiedlichen Nominalgewichts umfasst. Alternativ oder zusätzlich kann jedoch auch vorgesehen sein, dass der Justiergewichtsvorrat eine Mehrzahl von Einzelgewichtsstücken gleichen Nominalgewichts umfasst. Die Kombination beider Varianten ist dabei ganz besonders bevorzugt. Beispielsweise können vier der bevorrateten Einzelgewichtsstücke normierte Nominalgewichte der Größen "0,1", "0,2", "0,2" und "0,5" aufweisen, mit denen sich in Schritten von "0,1" alle Justiergewichte zwischen "0,1" und "0,9" in Form vorausgewählter Gruppen von Einzelgewichtsstücken realisieren lassen.

Wie eingangs bereits erwähnt, bewährt sich die vorliegende Erfindung insbesondere dann, wenn das Verfahren zu einem Zeitpunkt durchgeführt wird, zu dem die Lastaufnahme mit einem an die Form eines zu verwiegenden Wägegutes angepassten Adapter belastet ist. In solchen Fällen befreit das erfindungsgemäße Verfahren den Benutzer nämlich von der ansonsten erforderlichen Notwendigkeit, die Justierung mit der herstellerseitig vorgesehenen Standard-Konstellation der Waage, insbesondere mit Standard-Waagschale, durchzuführen und die Waage im justierten Zustand mit dem für die spezielle Anwendung optimierten Wägeguthalter auszustatten. Der dabei durch die notwendige thermische Akklimatisierung der unterschiedlichen Komponenten erforderliche Zeitverlust ist erheblich. Die Zeit- und damit Kostenvorteile für den Anwender, die sich aus der Umsetzung des erfindungsgemäßen Verfahrens, insbesondere in der Software der bei elektronischen Waagen standardmäßig vorhandenen Steuereinheit, ist offensichtlich.

Weitere Merkmale und Vorteile der Erfindung ergeben sich aus der nachfolgenden speziellen Beschreibung und den Zeichnungen.

### Kurzbeschreibung der Zeichnungen

Es zeigt:

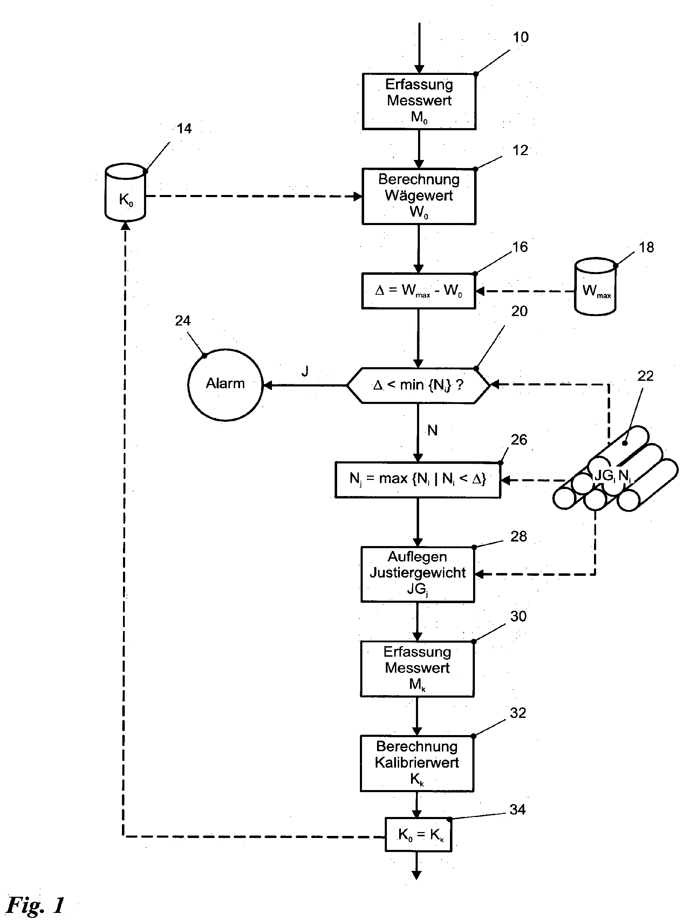

- Figur 1:: ein Flussdiagram einer Ausführungsform des erfindungsgemäßen Verfahrens.

### Beschreibung bevorzugter Ausführungsformen

Figur 1 zeigt in Form eines Flussdiagrams eine bevorzugte Ausführungsform des erfindungsgemäßen Justierverfahrens, dessen Ausführungszeitpunkt vom Fachmann in Ansehung gesetzlicher und praktischer Vorgaben zur Justierung von Waagen variiert werden kann. Besonders vorteilhafte Anwendung findet das erfindungsgemäße Verfahren in Fällen, in denen die Lastaufnahme der Waage einen von standardisierten Waagschalen abweichenden, insbesondere schwereren Wägeguthalter trägt.

Zunächst wird in einem ersten Schritt 10 ein für die spezielle Form der betroffenen Waage typischer Messwert M₀ aufgenommen. Der Messwert M₀ ist bei den in erster Linie von der Erfindung profitierenden EMK-Waagen regelmäßig ein Messstrom, mittels dessen ein die gewichtsbedingte Auslenkung der Lastaufnahme kompensierendes Magnetfeld erzeugt wird. Bei anderen Waagentypen, beispielsweise bei Waagen mit Dehnmessstreifen, kann der Messwert M₀ jedoch auch anderer Natur, beispielsweise eine Messspannung sein.

Im Folgeschritt 12 wird der Messwert M₀ in einen Wägewert W₀ umgerechnet, wobei zur Umrechnung ein in einem Speicher 14 hinterlegter Justierwert K₀ herangezogen wird. Der Wert K₀ resultiert vorzugsweise aus einer vorangegangenen Justierung. Der resultierende Wägewert W₀ repräsentiert den aktuellen Belastungszustand des Lastaufnehmers, der insbesondere auch ein eventuelles Übergewicht eines speziellen Wägeguthalters berücksichtigt.

Sodann wird in einem nächsten Schritt 16 aus einem Speicher 18 ein Maximalbelastungswert Wₘₐₓ abgerufen und mit dem berechneten Wägewert W₀ verglichen. Der Maximalbelastungswert Wₘₐₓ repräsentiert ein herstellerseitig vorgegebenes Maximalgewicht, mit dem der Lastaufnehmer belastbar ist ohne in einen Überlastzustand überzugehen. Der in Schritt 16 vorgenommene Vergleich führt zum Differenzwert Δ, der ein maximales Zusatzgewicht repräsentiert, mit welchem der Lastaufnehmer zusätzlich belastbar ist, ohne in den Überlastbereich überzugehen.

Im Anschluss erfolgt im Prüfschritt 20 ein Vergleich des zuvor berechneten Differenzwertes Δ mit den Nominalgewichten N_{I} eines Vorrates von vorzugsweise verschiedenen Justiergewichten JG_{I}. Durch die Nomenklatur JG_{I} bzw. N_{I} soll die Zuordnung der Nominalgewichte N_{I} zu den unterschiedlichen Justiergewichten JG_{I}, realisiert durch Einzelgewichtsstücke oder vorausgewählte Gruppen von Einzelgewichtsstücken, verdeutlicht werden.

Stellt sich im Prüfschritt 20 heraus, dass der Differenzwert Δ kleiner als das kleinste Nominalgewicht N_{I} ist, wird in Schritt 24 ein Alarm ausgegeben.

Existiert im Justiergewicht-Vorrat 22 Jedoch wenigstens ein Justiergewicht JGi, dessen Nominalgewicht N_{I} kleiner ist als der Differenzwert Δ, wird von diesen dasjenige Justiergewicht JGⱼ mit dem größten Nominalgewicht N_{I} ausgewählt.

Dieses ausgewählte Justiergewicht JGⱼ wird alsdann in Schritt 28 auf einen Justiergewichtshalter aufgelegt, der in gravimetrischer Wirkverbindung mit der Lastaufnahme steht. Mit anderen Worten wird die Lastaufnahme mit einem Justiergewicht JGⱼ belastet. Aufgrund der zuvor erläuterten Verfahrensschritte ist dabei sichergestellt, dass die Waage insgesamt nicht in den Überlastbereich übergeht. Andererseits ist jedoch auch sichergestellt, dass der aktuelle Belastungszustand im Rahmen der durch die Justiergewichtsstaffelung vorgegebenen Möglichkeiten maximal nahe an der durch den Maximalbelastungswert Wₘₐₓ repräsentierten Maximalbelastung liegt.

Es ist dies der optimale Belastungszustand, um eine Justierung durchzuführen. Hierzu wird in Verfahrensschritt 30 ein erneuter Messwert Mₖ aufgenommen. Im nachfolgenden Schritt 32 wird dann auf Basis der Kenntnis des ausgewählten Nominalgewichtes Nⱼ ein neuer Justierwert Kₖ berechnet. Der neue Justierwert Kₖ ersetzt dann den gespeicherten Justierwert K₀ (Schritt 34) und wird nachfolgenden Wägeprozessen zugrunde gelegt.

Auf diese Weise kann eine Justierung auch dann vorgenommen werden, wenn die Lastaufnahme mit einem nicht herstellerseitig standardisierten Wägeguthalter ausgestattet ist. Es müssen weder Abstriche an die Justiergenauigkeit (Justierung möglichst nahe am Maximalbelastungszustand) noch in Bezug auf die Handhabung (Wechsel des Wägeguthalters) hingenommen werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bazugszeichenliste

- 10: Verfahrensschritt
- 12: Verfahrensschritt
- 14: Speicher
- 16: Verfahrensschritt
- 18: Speicher
- 20: Verfahrensschritt
- 20': Verfahrensschritt
- 22: Justiergewichtsvorrat
- 24: Verfahrensschritt
- 26: Verfahrensschritt
- 28: Verfahrensschritt
- 30: Verfahrensschritt
- 32: Verfahrensschritt
- 34: Verfahrensschritt

## Patentansprüche

1. Verfahren zum automatisierten Justieren einer Waage mit automatisierter Justiergewichtsschaltung, umfassend die automatisch durchgeführten Schritte:
- Auflegen eines aus einem mehrere Justiergewichte (JG_{I}) umfassenden Justiergewicht-Vorrat (22) ausgewählten Justiergewichts (JG_{I}) auf einen mit einer Lastaufnahme in gravimetrischer Wirkverbindung stehenden Justiergewlchtshalter,
- Erfassen eines für die Belastung der Lastaufnahme repräsentativen Messwertes (Mₖ) und
- Berechnung, aus dem repräsentativen Messwert (Mₖ), eines entsprechenden Justierwertes (Kₖ), der bei nachfolgenden Wägungen einer Ermittlung von Wägewerten aus den zugeordneten Messwerten zugrunde gelegt werden soll,
**dadurch gekennzeichnet,**
**dass** unmittelbar vor dem Auflegen des Justiergewichts (JG_{I}) ein Wägewert (W₀, Wₖ₋₁) ermittelt und ein innerhalb eines vorgegebenen Belastungsfensters der Lastaufnahme maximal mögliches Zusatzgewicht (Δ) berechnet wird,
und **dass** dasjenige Justiergewicht (JGⱼ) ausgewählt und auf den Justiergewichtshalter aufgelegt wird, dessen Nominalgewicht (Nⱼ) das größte all derjenigen Justiergewichte (JG_{I}) ist, deren Nominalgewicht (N_{I}) kleiner als das berechnete, maximal mögliche Zusatzgewicht (Δ) ist.

2. Verfahren nach Anspruch 1,
**dadurch gekennzeichnet,**
**dass** der Justiergewichtsvorrat eine Mehrzahl von Einzelgewichtsstücken unterschiedlichen Nominalgewichts umfasst.

3. Verfahren nach einem der vorangehenden Ansprüche,
**dadurch gekennzeichnet,**
**dass** der Justiergewichtsvorrat eine Mehrzahl von Einzelgewichtsstücken gleichen Nominalgewichts umfasst.

4. Verfahren nach einem der vorangehenden Ansprüche,
**dadurch gekennzeichnet,**
**dass** im Fall, dass das Nominalgewicht (N_{I}) des kleinsten Justiergewichtes (JG_{I}) des Justiergewichts-Vorrates (22) größer als das berechnete, maximal mögliche Zusatzgewicht (Δ) ist, ein Fehler-Alarm ausgegeben wird.

5. Verfahren nach einem der vorangehenden Ansprüche,
**dadurch gekennzeichnet,**
**dass** es zu einem Zeitpunkt durchgeführt wird, zu dem die Lastaufnahme mit einem an die Form eines zu verwiegenden Wägegutes angepassten Adapter belastet ist

## Claims

1. A method for the automated adjustment of a scale having an automated adjustment weight circuit, comprising the following steps performed automatically:
- placing an adjustment weight (JG_{I}) selected from an adjustment weight stock (22) comprising a plurality of adjustment weights (JG_{I}) onto an adjustment weight holder which is connected to a load support in a gravimetrically effective manner,
- detecting a measurement value (Mₖ) representative of the loading of the load support, and
- calculating, from the representative measurement value (Mₖ), a corresponding adjustment value (Kₖ), which should be used as a basis in the determination of weight values from the associated measurement values in subsequent weighings,
**characterized in that**,
immediately before the adjustment weight (JG_{I}) is placed on, a weight value (W₀, Wₖ₋₁) is determined and a maximum possible additional weight (Δ) within a specified loading range of the load support is calculated,
and that, the adjustment weight (JG_{I}) having a nominal weight (N_{I}) that is the greatest of all those adjustment weights (JG_{I}) that have a nominal weight (N_{I}) less than the calculated maximum possible additional weight (Δ) is selected and is placed onto the adjustment weight holder.

2. The method according to claim 1,
**characterized in that**
the adjustment weight stock comprises a plurality of individual weight pieces of different nominal weight.

3. The method according to any of the preceding claims,
**characterized in that**
the adjustment weight stock comprises a plurality of individual weight pieces of the same nominal weight.

4. The method according to any of the preceding claims,
**characterized in that**,
in the case that the nominal weight (N_{I}) of the smallest adjustment weight (JG_{I}) of the adjustment weight stock (22) is greater than the calculated, maximum possible additional weight (Δ), a fault alarm is output.

5. The method according to any of the preceding claims,
**characterized in that**
it is carried out at a time at which the load support is loaded with an adapter adapted to the shape of an item to be weighed.

## Revendications

1. Procédé pour l'ajustement automatisé d'une balance avec commutation des poids d'ajustement automatisée, comprenant les étapes exécutées automatiquement :
- la pose d'un poids d'ajustement (JG_{I}) sélectionné parmi une réserve de poids d'ajustement (22) comprenant plusieurs poids d'ajustement (JG_{I}) sur un support de poids d'ajustement se trouvant en liaison fonctionnelle gravimétrique avec un logement de charge,
- l'acquisition d'une valeur mesurée (M_{K}) représentative de la sollicitation du logement de charge et
- le calcul, à partir de la valeur mesurée (M_{K}) représentative, d'une valeur d'ajustement (K_{K}) correspondante, qui doit servir de base, lors des pesages suivants, à une détermination de valeurs pesées à partir des valeurs mesurées associées,
**caractérisé en ce**
**qu'**une valeur pesée (W₀, Wₖ₋₁) est déterminée immédiatement avant la pose du poids d'ajustement (JG_{I}) et qu'un poids supplémentaire maximal possible (Δ) est calculé à l'intérieur d'une fenêtre de sollicitation prédéfinie du logement de charge,
et **que** le poids d'ajustement (JG_{I}) dont le poids nominal (N_{I}) est le plus grand de tous les poids d'ajustement (JG_{I}) dont le poids nominal (N_{I}) est inférieur au poids supplémentaire maximal possible (Δ) calculé est sélectionné et posé sur le support de poids d'ajustement.

2. Procédé selon la revendication 1,
**caractérisé en ce**
**que** la réserve de poids d'ajustement comprend une pluralité de poids individuels de poids nominal différent.

3. Procédé selon l'une quelconque des revendications précédentes,
**caractérisé en ce**
**que** la réserve de poids d'ajustement comprend une pluralité de poids individuels de poids nominal identique.

4. Procédé selon l'une quelconque des revendications précédentes,
**caractérisé en ce**
**que**, au cas où le poids nominal (N_{I}) du poids d'ajustement (JG_{I}) le plus petit de la réserve de poids d'ajustement (22) serait supérieur au poids supplémentaire maximal possible (Δ) calculé, une alarme de défaut est émise.

5. Procédé selon l'une quelconque des revendications précédentes,
**caractérisé en ce**
**qu'**il est exécuté à un moment auquel le logement de charge est sollicité avec un adaptateur adapté à la forme d'un article à peser.
